# EUROPEAN PATENT APPLICATION

(11) **EP 4 838 758 A1**
(43) Date of publication of application: **11.11.2026**
(21) Application number: 24915657.1
(22) Date of filing: 30.07.2024
(51) Int. Cl.: H02K 1/20

(54) **STATOR CORE OF ROTARY ELECTRIC MACHINE AND ROTARY ELECTRIC MACHINE**

(30) Priority: 05.01.2024 JP 2024000589
(71) Applicant: KABUSHIKI KAISHA TOSHIBA, Minato-ku Tokyo 105-0023 (JP)
(72) Inventor: KURIHARA, Keiko, Kawasaki-shi, Kanagawa 212-0013 (JP); KABATA, Yasuo, Kawasaki-shi, Kanagawa 212-0013 (JP); SHIMIZU, Shinichi, Kawasaki-shi, Kanagawa 212-0013 (JP); HATANO, Hiroshi, Kawasaki-shi, Kanagawa 212-0013 (JP); TOI, Takahiro, Kawasaki-shi, Kanagawa 212-0013 (JP); AOKI, Hiroyuki, Kawasaki-shi, Kanagawa 212-0013 (JP); WATANABE, Hirokazu, Kawasaki-shi, Kanagawa 212-0013 (JP); OOSAKI, Toshiyuki, Kawasaki-shi, Kanagawa 212-0013 (JP)
(74) Representative: Hoffmann Eitle
(86) International application number: PCT/JP2024/027208
(87) International publication number: WO 2025/146733

(57) **Abstract**

A stator core of a rotating electrical machine (10-1 or 10-2) according to an embodiment includes an annular core back portion (10c) and a plurality of tooth portions (13) extending in a radial direction of the core back portion (10c), wherein a flow path (17) opened to allow a coolant to flow is provided inside the core back portion (10c) and inside the plurality of tooth portions (13), and the flow path (17) includes a flow path portion in which the coolant flows at least inside the plurality of tooth portions (13) toward a radial direction of the stator core and toward an axial direction.

## Description

### FIELD

Embodiments described herein relate generally to a stator core of a rotating electrical machine, and a rotating electrical machine.

### BACKGROUND

Conventionally, metal is mainly used as a material of a stator core of a rotating electrical machine, e.g., a stator core of an electric motor or a dynamotor. The stator core is made of a soft magnetic material such as an electromagnetic steel sheet, and has a bulk body made of the soft magnetic material or a laminated structure in which the bulk bodies are laminated.

The main role and effect of the stator core is to provide a path for a generated excitation current and to provide a large driving force. Because magnetic lines of force pass through iron about 1000 times as easily as air, magnetic flux is efficiently transferred between a rotor and armature coils of a stator, and leakage magnetic flux is reduced.

The stator core not only provides electrical effects but also plays an important role in structural design. That is, the stator core has a plurality of grooves (hereinafter referred to as "slots") arranged in a circumferential direction mainly on an inner diameter side of the structure. Armature coils are accommodated in these slots, whereby all components are assembled into a completed stator, and resistance to external stresses such as vibrations acting on the stator is achieved, improving mechanical strength.

Furthermore, the stator core serves as a reference for a relative positional relationship such as a gap between respective portions and for positioning such as concentricity and axial alignment, and has a role of reducing a manufacturing dimensional tolerance when assembling an electric motor or a dynamotor and promoting improvement of accuracy.

Depending on the type of the electric motor, field magnetic flux that the stator receives from the rotor may be large, and in that case, an eddy current loss occurs in a metal core of the stator, and heat is generated. Specifically, when an electric conductor made of metal or a laminated electromagnetic steel plate is used for a stator core of an electric motor or a dynamotor including a certain type of rotor, heat is generated due to loss. The heat generated in armature coils of the stator exerts a thermal influence on peripheral structures. In addition, when temperature conditions are imposed, this heat generation becomes a major problem.

On the other hand, it is conceivable to adopt a coreless structure in which an iron core is eliminated in this type of electric motor and to make the stator teeth an air layer to thereby eliminate almost all the flow of magnetic flux, thereby avoiding heat generation caused by eddy current generation in the stator teeth. However, when the coreless structure is adopted, it is difficult to achieve assembly properties such as dimensions and positioning during manufacturing, and there is a concern that an assembly jig is required and the number of steps for processing will increase.

As one of the methods of solving the above-described problems, it is conceivable to adopt a core made of a material that does not cause or can reduce the eddy current loss. Since the electrical conductivity has a strong correlation with the eddy current loss, by using a material having a low or zero electrical conductivity, e.g., a non-metal material (such as a resin material), the eddy current loss can be suppressed. While the eddy current loss can be suppressed, the above-described non-metal material (resin material or the like) generally has a lower thermal conductivity than a metal material, and therefore, if no measures are taken, heat transmitted and released through the core with the armature coils as a heat source may cause an excessive temperature rise in armature coils or in the vicinity thereof.

In order to solve this problem, as a method of cooling the inner diameter side or the outer diameter side of the stator, it is conceivable to adopt configurations such as a forced air cooling type that includes an auxiliary device such as a fan, and a self-air cooling type that allows airflow generated by rotation of the electric motor to flow in and out through an outer shell structure provided with concave and convex portions. In addition, depending on the place and environment where the electric motor is installed, miniaturization and weight reduction are forced as conditions, and it is required to suppress the number of components as much as possible within a range in which characteristics required for the electric motor are secured.

In view of the above, it is desirable to provide a stator core of a rotating electrical machine and a rotating electrical machine capable of improving cooling performance with a simple structure.

### SUMMARY

A stator core of a rotating electrical machine according to an embodiment includes an annular core back portion, and a plurality of tooth portions extending in a radial direction of the core back portion, wherein a flow path opened to allow a coolant to flow is provided inside the core back portion and inside the plurality of tooth portions, and the flow path includes a flow path portion in which the coolant flows at least inside the plurality of tooth portions toward a radial direction of the stator core and toward an axial direction.

### BRIEF DESCRIPTION OF THE DRAWINGS

FIG. 1 is a cross-sectional view illustrating an example of a basic structure of a rotating electrical machine according to an embodiment.
FIG. 2 is an enlarged cross-sectional view illustrating an example of a cross-sectional shape of a part of a stator 10 of the rotating electrical machine according to the embodiment.
FIG. 3 is a perspective view illustrating an example of a structure of a stator core 10-1.
FIG. 4 is a plan view of the stator core 10-1 as viewed from a radial direction.
FIG. 5 is a conceptual diagram illustrating a structure of a part of the stator core 10-1.
FIG. 6 is a conceptual diagram illustrating a cross-sectional shape of a part of the stator core 10-1 in a vicinity of an outflow port 15 shown in FIG. 5.
FIG. 7 is a conceptual diagram of a cross-sectional shape of a portion of the stator core 10-1 shown in FIG. 5 where a mounting hole 16 is present, as viewed from a circumferential direction.
FIG. 8 is a conceptual diagram illustrating an example of a case where an inner wall of a flow path 17 has a fin-shaped portion.
FIG. 9 is a conceptual diagram illustrating an example of a case where the flow path 17 is apart from the region of the mounting hole 16 by a predetermined distance or more.
FIG. 10 is a conceptual diagram illustrating a structure of a part of a stator core 10-2 different from the stator core 10-1 shown in FIG. 5.
FIG. 11 is a conceptual diagram illustrating a cross-sectional shape of a part of the stator core 10-2 in a vicinity of an inflow port 14 shown in FIG. 10.
FIG. 12 is a conceptual diagram of a cross-sectional shape of a portion of the stator core 10-2 shown in FIG. 10 where a mounting hole 16 is present, as viewed from a circumferential direction.
FIG. 13 is a conceptual diagram illustrating an example of a case where the inner wall of the flow path 17 has a concavo-convex portion.
FIG. 14 is a conceptual diagram illustrating an example of a cross-sectional shape of a region sandwiched between the inflow port 14 and the outflow port 15.
FIG. 15 is a conceptual diagram illustrating an example of a case where the flow path 17 in a core back portion 10c has a plurality of flow path portions arranged in the circumferential direction in a region sandwiched between the inflow port 14 and the outflow port 15 of the stator core.

### DETAILED DESCRIPTION

Hereinafter, embodiments will be described with reference to the drawings.

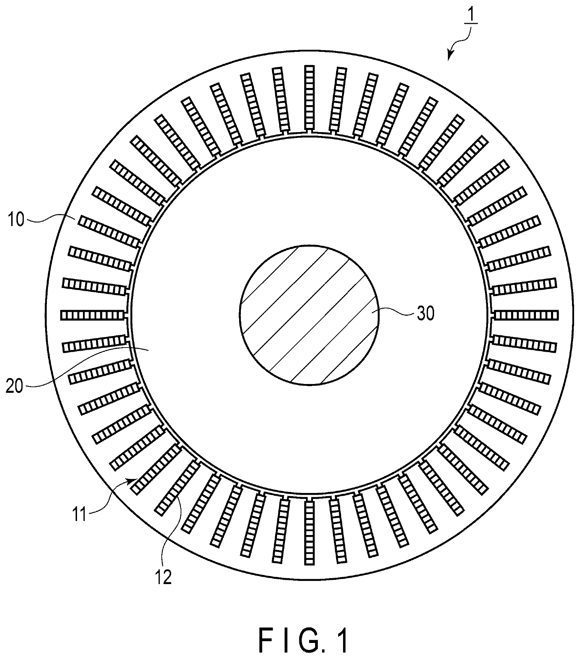

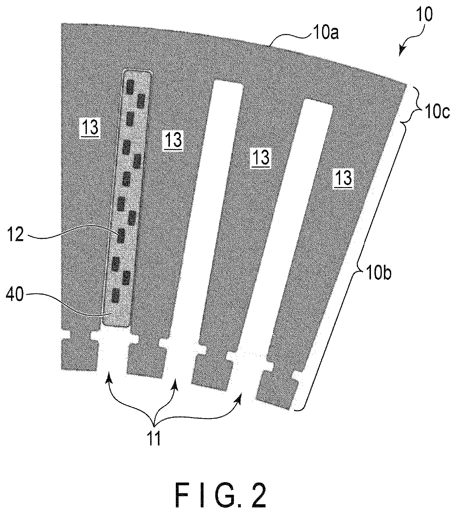

FIG. 1 is a cross-sectional view illustrating an example of a basic structure of a rotating electrical machine according to an embodiment. FIG. 2 is an enlarged cross-sectional view illustrating an example of a cross-sectional shape of a part of a stator 10 of the rotating electrical machine according to the embodiment.

In the present embodiment, a coolant flow path, opened to allow a coolant (cooling medium) to flow, is provided inside a stator core on a stator 10 side, but FIGS. 1 and 2 illustrate a state before the coolant flow path is provided (a state similar to that of a general rotating electrical machine). Hereinafter, the coolant flow path is simply referred to as a "flow path".

FIG. 1 shows a cross-sectional shape of the rotating electrical machine as viewed from an axial direction. The rotating electrical machine shown in FIG. 1 corresponds to, for example, an electric motor or a dynamotor, and includes a stator 10 and a rotor 20. The rotor 20 rotates about a rotation shaft 30. The rotor 20 is arranged at a predetermined distance from the stator 10, and a predetermined gap is provided between the stator 10 and the rotor 20.

The stator 10 is provided with slots 11 at regular intervals in a circumferential direction, and armature coils 12 are provided in the respective slots 11. An insulator (not shown) is provided between the slot 11 and the armature coil 12, and a wedge (not shown) is also provided to prevent the armature coil 12 from protruding.

While FIG. 1 shows an example of an embodiment in which the slots 11 and the armature coils 12 are arranged closer to the inner diameter side of the stator 10, there is also an embodiment in which the slots 11 and the armature coils 12 are arranged closer to the outer diameter side of the stator 10. Furthermore, while FIG. 1 shows an example of an embodiment in which individual coil pieces constituting the armature coil 12 are stacked in a radial direction of the rotating electrical machine in the slot 11, there is also an embodiment in which the coil pieces are arranged in a distributed manner in the slots 11.

FIG. 2 shows an example of a cross-sectional shape of a part of the stator 10. The individual coil pieces constituting the armature coil 12 are dispersed in an insulator 40 in the slot 11.

The stator 10 includes an annular core back portion 10c, and a core body 10b arranged on the inner diameter side of the core back portion 10c. Note that, unlike the example of FIG. 2, there is also a configuration in which the core back portion 10c is arranged on the inner diameter side of the core body 10b (i.e., a configuration in which the arrangement relationship between the core body 10b and the core back portion 10c is reversed).

The core body 10b includes a plurality of tooth portions 13 extending in a radial direction of the core back portion 10c, and slots 11 formed between adjacent ones of the tooth portions 13. In the slot 11, the individual coil pieces of the armature coil 12 are accommodated in a state of being insulated by the insulator 40.

In the present embodiment, a flow path, opened to allow a coolant to flow, is provided inside the core back portion 10c and inside the plurality of tooth portions 13, but FIGS. 1 and 2 illustrate a state before the flow path is provided.

The core back portion 10c and the plurality of tooth portions 13 constitute a single stator core. The stator core is made of a non-metal material. Hereinafter, a stator core in which the plurality of tooth portions 13 are arranged on the outer diameter side of the core back portion 10c is referred to as a "stator core 10-1". On the other hand, a stator core in which the plurality of tooth portions 13 are arranged on the inner diameter side of the core back portion 10c is referred to as a "stator core 10-2". The stator core 10-1 and the stator core 10-2 may be collectively referred to simply as a "stator core".

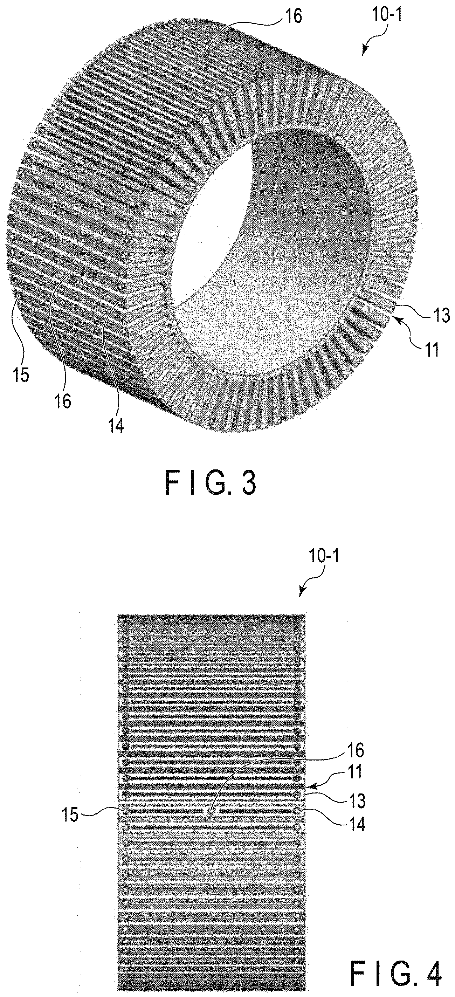

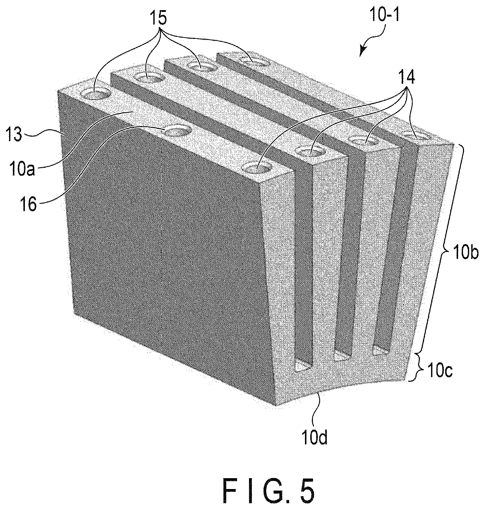

FIG. 3 is a perspective view illustrating an example of a structure of the stator core 10-1. FIG. 4 is a plan view of the stator core 10-1 as viewed from the radial direction. FIG. 5 is a conceptual diagram illustrating a structure of a part of the stator core 10-1.

As shown in FIGS. 3 to 5, in the stator core 10-1, the plurality of tooth portions 13 are arranged on the outer diameter side of the core back portion 10c.

On the outer diameter side of each of the plurality of tooth portions 13, an inflow port 14 and an outflow port 15 of a flow path described later are provided. The inflow port 14 and the outflow port 15 are provided at both ends of the tooth portion 13 so as to be separated from each other in the axial direction of the stator core 10-1 on an outer diameter side surface 10a of the tooth portion 13. In addition, a mounting hole 16 for inserting a mounting member (bolt or the like) used when the stator core 10-1 is installed is provided on the outer diameter side surfaces 10a of some of the plurality of tooth portions 13. The rotor 20 (not shown) is arranged radially inward of an inner diameter side surface 10d of the core back portion 10c.

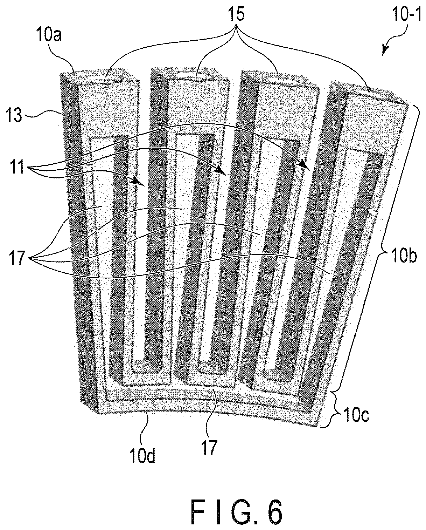

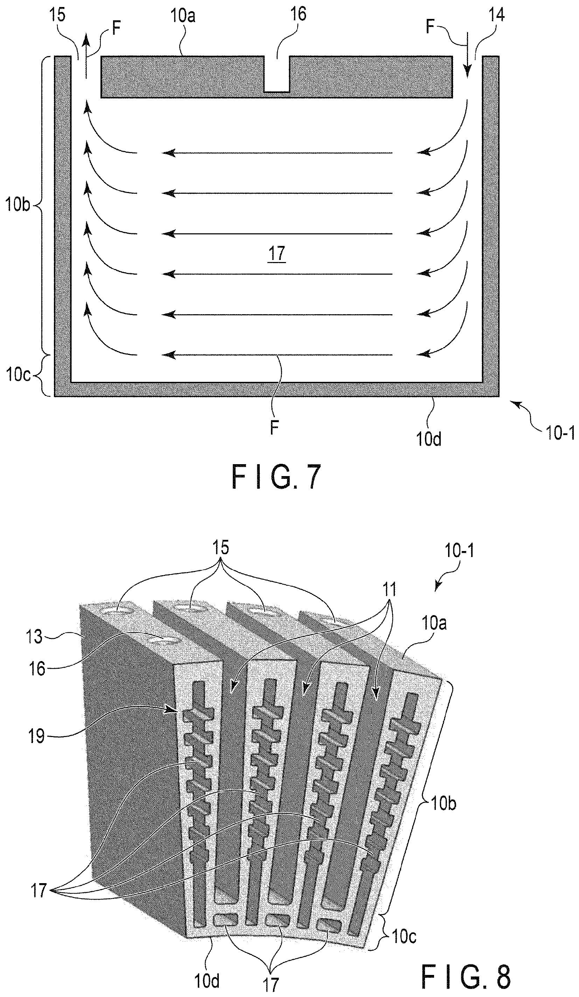

FIG. 6 is a conceptual diagram illustrating a cross-sectional shape of a part of the stator core 10-1 in the vicinity of the outflow port 15 shown in FIG. 5. FIG. 7 is a conceptual diagram of a cross-sectional shape of a portion of the stator core 10-1 shown in FIG. 5 where the mounting hole 16 is present, as viewed from the circumferential direction.

The cross-sectional shape of the vicinity of the inflow port 14 and the cross-sectional shape of the region sandwiched between the inflow port 14 and the outflow port 15 are the same as those shown in FIG. 6, and thus the illustration thereof is omitted here. Note that the cross-sectional shape of the region sandwiched between the inflow port 14 and the outflow port 15 may be formed to be different from that shown in FIG. 6. For example, in the region sandwiched between the inflow port 14 and the outflow port 15, the flow path 17 in the core back portion 10c may have a plurality of flow path portions arranged in the circumferential direction (a plurality of flow path portions each partitioned by a wall).

As shown in FIGS. 6 and 7, in the stator core 10-1, the flow path 17, which is opened to allow a coolant F to flow, is provided inside the core back portion 10c and inside the plurality of tooth portions 13.

In this example, as shown in FIG. 6, the flow path 17 inside the four tooth portions 13 communicates with the flow path 17 inside the core back portion 10c located on the inner diameter side thereof. The structures as shown in FIG. 6 are continuously provided in the circumferential direction. While the example of FIG. 6 shows a case where the four tooth portions 13 are communicated, the present invention is not limited to this example, and a number of tooth portions 13 different from four may be communicated.

As shown in FIGS. 6 and 7, the flow path 17 has a flow path portion in which the coolant F flows inside the plurality of tooth portions 13 toward the radial direction of the stator core 10-1 and also toward the axial direction. In addition, the flow path 17 has a flow path portion in which the coolant F flows inside the core back portion 10c toward the axial direction of the stator core 10-1 and also toward the circumferential direction. Furthermore, the flow path 17 has, on the back side of the inner diameter side surface 10d of the core back portion 10c, a flow path wall surface with which the coolant flowing through the flow path 17 comes into contact. With such structures of the flow path 17, the coolant F flowing through the flow path 17 cools both the tooth portions 13 and the core back portion 10c through the wall surface of the flow path 17.

Specifically, as shown in FIG. 7, the coolant F enters the inside of the stator core 10-1 from the inflow port 14 and flows radially inward of the stator core 10-1. Thereafter, the coolant F flows inside the plurality of tooth portions 13 and inside the core back portion 10c toward the axial direction. Therefore, the coolant F evenly cools both the tooth portions 13 and the core back portion 10c through the wall surface of the flow path 17.

Inside the core back portion 10c, the coolant F flows toward the axial direction while flowing toward the circumferential direction, and flows while being in contact with the flow path wall surface on the back side of the inner diameter side surface 10d of the core back portion 10c. Therefore, the coolant F effectively cools particularly the inner diameter side portion of the core back portion 10c through the wall surface of the flow path 17.

After flowing inside the plurality of tooth portions 13 and inside the core back portion 10c toward the axial direction, the coolant F flows radially outward of the stator core 10-1, and flows out from the outflow port 15 to the outside of the stator core 10-1.

By forming the stator core 10-1 in this manner, it is possible to efficiently suppress and reduce the heat generated from the armature coils 12, to reduce the heat dissipation to the inner diameter side of the stator 10, and to suppress the thermal influence on the gap between the stator 10 and the rotor 20 and on the surface of the rotor 20. That is, not only the heat generated from the armature coils 12 can be efficiently suppressed and reduced, but also the heat transfer to the rotor 20 can be suppressed, the heat accumulation state in which the heat stays in the gap between the rotor 20 and the stator 10 can be suppressed, and the influence on the radiant heat due to the heat generated from the stator 10 can be reduced.

Hereinafter, various desirable matters for the stator core 10-1 will be described, but these matters are not limited to the stator core 10-1 and are also applied to a stator core 10-2 described later.

The flow path 17 is required to be installed with a structure that ensures a mechanical strength that the armature coils 12 can withstand against external forces such as vibrations during operation of the rotating electrical machine 1 and Lorentz forces generated when a short-circuit current is generated. Therefore, the dimensions of the flow path 17, such as the wall thickness and the curvature of the corner portion, which are greatly related to the mechanical strength, are set to appropriate values according to the core material used for the production and the production method thereof.

In addition, the stator core is required to have a structure that ensures the mechanical strength described above and also exhibits the effect of cooling performance. In order to improve the cooling performance, for example, a material having a high thermal conductivity may be used, or an inner wall shape having a larger surface area may be applied.

Examples of a non-metal material having a high thermal conductivity include ceramics such as silicon carbide (SiC). However, SiC has a significantly high electrical conductivity in a high temperature range, and thus increases eddy current loss. In a case where a material having a large temperature dependence of electrical conductivity such as SiC is used, it is verified that the cooling performance, efficiency, and temperature rise of the stator core meet the standards.

A preferable example of the non-metal material includes a resin material. The resin material is preferably a highly heat-resistant resin material, and in order to cause the temperature that instantaneously rises in an emergency or the like to be included in the specification temperature range, it is preferable to use polyphenylene sulfide resin (PPS) or polyether ether ketone resin (PEEK).

It is also desirable that the stator core be capable of being subjected to processing such as forming holes and notches that are necessary during manufacture. To this end, it is desirable that a strength test in accordance with standards be conducted to determine whether the processed portion has resistance to loads or stresses applied thereto during and after processing, and that the configuration and dimensions be set so as to accommodate them.

For the cooling performance of the stator core, it is desirable to check changes in flow rate and temperature for various shapes of the stator core in advance through thermal-fluid analysis, and to extract an optimum shape.

The thermal-fluid analysis checks, by using the tooth shape, type of coolant, flow rate, and temperature as parameters, the temperature distribution and the flow rate distribution for the cross-sectional shape and the three-dimensional shape extended in the axial direction. In any case, it is desirable to transiently check the temperature influence on the stator core and the temperature change of the coolant itself, and to set an optimal shape, inlet/outlet installation location, and inlet/outlet amount having excellent cooling performance.

The temperature distribution depends largely on the thermal conductivity and workability of the material of the stator core. Therefore, in a case where a test piece is used in analysis, it is desirable to make production conditions of the test piece (treatment and processing of the material and the shape) as equivalent as possible to those of the finished body.

For the mechanical strength of the stator core, it is desirable to check the torque force generated during operation and the strength resistance in advance through stress analysis, and then to check the influence of the load during processing by performing, for example, a bending test or a vibration test.

Furthermore, because the coolant passing through the inside of the stator core has a strong correlation with temperature, in selecting the coolant, it is desirable to select a coolant according to specifications such as operation and maintenance periods, installation environments, and use environments, and to grasp the characteristics and tendency of the coolant in the flow path. In addition, depending on the installation environment, it is desirable to check the change in electrical characteristics by performing analysis in advance on a model simulating the aging deterioration state of the coolant.

The inner wall of the flow path 17 preferably has a fin-shaped portion or a concavo-convex portion in order to efficiently increase the surface area. It is desirable that these portions be arranged and shaped so that the flow of the coolant is not hindered.

FIG. 8 is a conceptual diagram illustrating an example of a case where the inner wall of the flow path 17 is formed to have a fin-shaped portion. By forming the inner wall of the flow path 17 into a fin shape, the surface area can be increased by approximately 1.5 to 2.0 times compared with a case without the fin shape, thereby improving cooling efficiency. The same applies to a case where the concavo-convex shape is adopted.

In the region sandwiched between the inflow port 14 and the outflow port 15 of the stator core, the flow path 17 in the core back portion 10c may include a plurality of flow path portions arranged in the circumferential direction.

FIG. 8 shows an example of a case where the flow path 17 in the core back portion 10c has a plurality of flow path portions arranged in the circumferential direction (a plurality of flow path portions each partitioned by a wall) in a region sandwiched between the inflow port 14 and the outflow port 15 of the stator core. With this structure, the core back portion 10c can be uniformly cooled, thereby improving cooling efficiency in the core back portion 10c.

In addition, in the vicinity of the mounting hole 16 of the stator core, it is desirable that the flow path 17 be formed to have a flow path portion adjusted to be apart from the region of the mounting hole 16 by a predetermined distance or more.

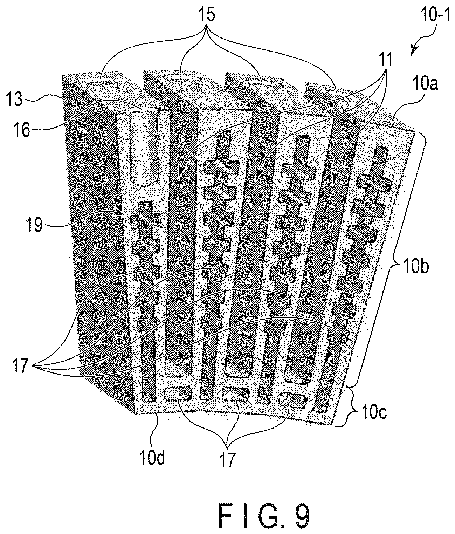

FIG. 9 is a conceptual diagram illustrating an example of a case where the flow path 17 is formed to be apart from the region of the mounting hole 16 by a predetermined distance or more. With this structure, the degree of freedom in designing the mounting hole 16 can be increased while maintaining the cooling performance of a certain level or more.

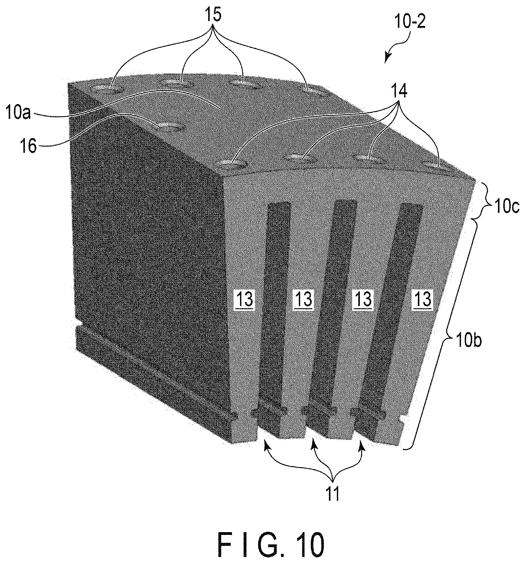

FIG. 10 is a conceptual diagram illustrating a structure of a part of a stator core 10-2 different from the stator core 10-1 shown in FIG. 5.

The stator core 10-2 shown in FIG. 10 is prepared by adding a flow path 17, an inflow port 14, an outflow port 15, and the like, to the stator core shown in FIG. 2 (the portion excluding the armature coil 12 and the insulator 40).

As shown in FIG. 10, in the stator core 10-2, a plurality of tooth portions 13 are arranged on an inner diameter side of a core back portion 10c.

An inflow port 14 and an outflow port 15 of a flow path described later are provided on an outer diameter side of the core back portion 10c. The inflow port 14 and the outflow port 15 are provided at both ends of the core back portion 10c so as to be separated from each other in the axial direction of the stator core 10-2 on an outer diameter side surface 10a of the core back portion 10c. In addition, a mounting hole 16 for inserting a mounting member (bolt or the like) used when the stator core 10-1 is installed is provided on the outer diameter side surface 10a of the core back portion 10c. The rotor 20 (not shown) is arranged radially inward of an inner diameter side surface 10d of the core back portion 10c.

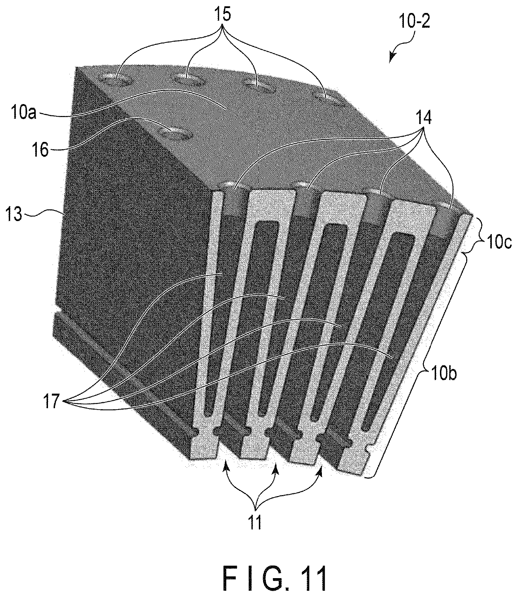

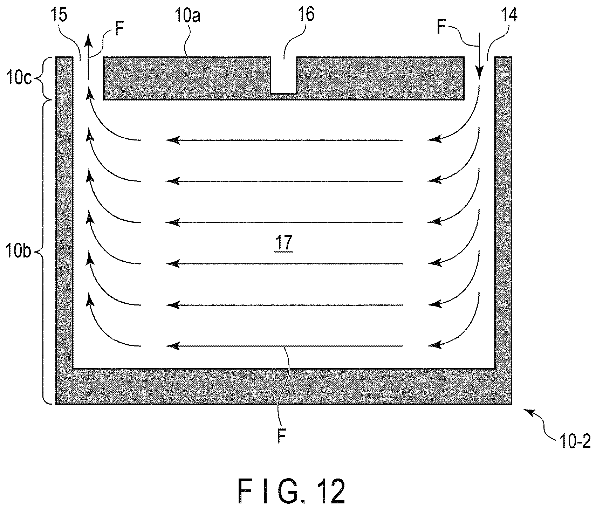

FIG. 11 is a conceptual diagram illustrating a cross-sectional shape of a part of the stator core 10-2 in the vicinity of the inflow port 14 shown in FIG. 10. FIG. 12 is a conceptual diagram of a cross-sectional shape of a portion of the stator core 10-2 shown in FIG. 10 where the mounting hole 16 is present as viewed from the circumferential direction.

The cross-sectional shape of the vicinity of the outflow port 15 and the cross-sectional shape of the region sandwiched between the inflow port 14 and the outflow port 15 are the same as those shown in FIG. 11, and thus the illustration thereof is omitted here. However, the cross-sectional shape of the region sandwiched between the inflow port 14 and the outflow port 15 may be formed to be different from that shown in FIG. 11. For example, in the region sandwiched between the inflow port 14 and the outflow port 15, the flow path 17 in the core back portion 10c may have a plurality of flow path portions arranged in the circumferential direction (a plurality of flow path portions each partitioned by a wall).

As shown in FIGS. 11 and 12, in the stator core 10-2, the flow path 17, which is opened to allow a coolant F to flow, is provided inside the core back portion 10c and inside the plurality of tooth portions 13.

As shown in FIGS. 11 and 12, the flow path 17 has a flow path portion in which the coolant F flows inside the plurality of tooth portions 13 toward the radial direction of the stator core 10-2 and also toward the axial direction. The flow path 17 has, on the back side of the outer diameter side surface 10a of the core back portion 10c, a flow path wall surface with which the coolant F flowing in the flow path 17 comes into contact. With such structures of the flow path 17, the coolant F flowing through the flow path 17 cools both the tooth portions 13 and the core back portion 10c through the wall surface of the flow path 17.

Specifically, as shown in FIG. 12, the coolant F enters the inside of the stator core 10-2 from the inflow port 14 and flows radially inward of the stator core 10-2. Thereafter, the coolant F flows inside the plurality of tooth portions 13 toward the axial direction. Thus, the coolant F evenly cools the tooth portions 13 and the core back portion 10c through the wall surface of the flow path 17.

The coolant F flows inside the plurality of tooth portions 13 toward the axial direction, then flows radially outward of the stator core 10-2, and flows out from the outflow port 15 to the outside of the stator core 10-2.

By forming the stator core 10-2 in this manner, it is possible to efficiently suppress and reduce the heat generated from the armature coils 12, to reduce the heat dissipation to the outer diameter side of the core back portion 10c, and to reduce and suppress the terminal influence on the surrounding structures.

In this example as well, the inner wall of the flow path 17 preferably has a fin-shaped portion or a concavo-convex portion in order to efficiently increase the surface area. It is desirable that these portions be arranged and shaped so that the flow of the coolant F is not hindered.

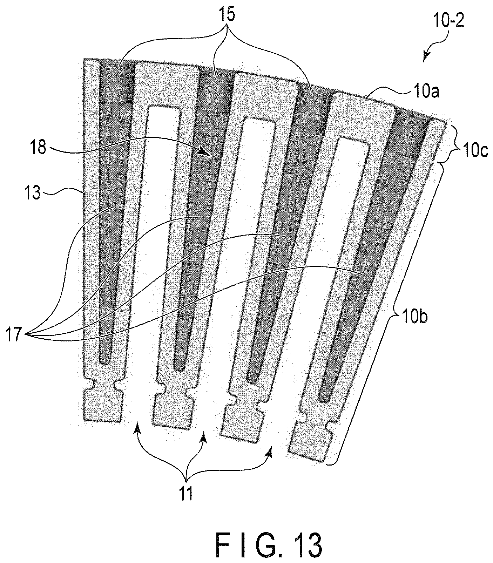

FIG. 13 is a conceptual diagram illustrating an example of a case where an inner wall of the flow path 17 is formed to have a concavo-convex portion. By forming the inner wall of the flow path 17 into a concavo-convex shape, the surface area can be increased by approximately 1.5 to 2.0 times compared with a case without the concavo-convex shape, thereby improving cooling efficiency. The same applies to a case where a fin shape is adopted.

FIG. 13 shows a cross-sectional shape of a part of the stator core 10-2 in the vicinity of the outflow port 15. The cross-sectional shape of the vicinity of the inflow port 14 and the cross-sectional shape of the region sandwiched between the inflow port 14 and the outflow port 15 are the same as those shown in FIG. 13, and thus the illustration thereof is omitted here. Note that the cross-sectional shape of the region sandwiched between the inflow port 14 and the outflow port 15 may be formed to be different from that shown in FIG. 13.

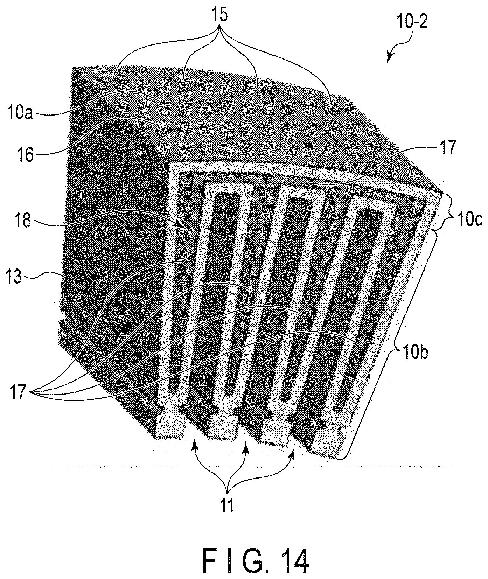

FIG. 14 is a conceptual diagram illustrating an example of a cross-sectional shape of a region sandwiched between the inflow port 14 and the outflow port 15.

In the example of FIG. 14, the flow paths 17 inside the four tooth portions 13 communicate with the flow path 17 inside the core back portion 10c located on the outer diameter side of them.

That is, the flow path 17 has a flow path portion in which the coolant F flows inside the core back portion 10c toward the axial direction of the stator core 10-1 and also toward the circumferential direction. Furthermore, the flow path 17 has, on the back side of the outer diameter side surface 10a of the core back portion 10c, a flow path wall surface with which the coolant F flowing in the flow path 17 comes into contact.

By forming the flow path portion through which the coolant F flows inside the core back portion 10c, the heat generated from the armature coils 12 can be removed, and in addition, the thermal influence on the surrounding structures can be efficiently reduced and suppressed.

Note that in the region sandwiched between the inflow port 14 and the outflow port 15 of the stator core, the flow path 17 in the core back portion 10c may include a plurality of flow path portions arranged in the circumferential direction.

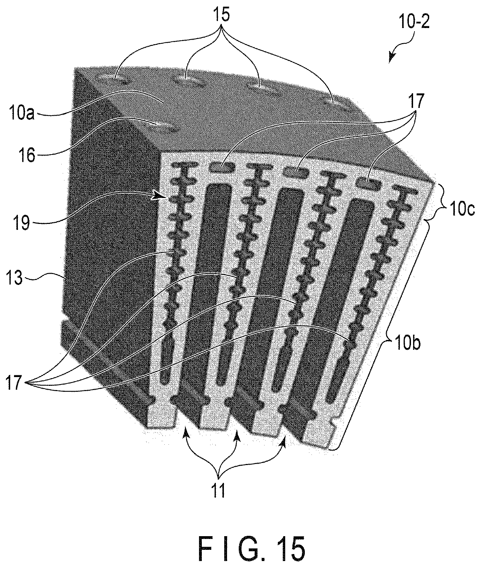

FIG. 15 shows an example of a case where the flow path 17 in the core back portion 10c has a plurality of flow path portions arranged in the circumferential direction (a plurality of flow path portions each partitioned by a wall) in a region sandwiched between the inflow port 14 and the outflow port 15 of the stator core. With this structure, the core back portion 10c can be uniformly cooled, thereby improving cooling efficiency in the core back portion 10c.

Furthermore, FIG. 15 illustrates an example of a case where the inner wall of the flow path 17 is formed to have a fin-shaped portion. Even when the inner wall of the flow path 17 is formed into a fin shape in this manner, the surface area of the flow path 17 can be increased and the cooling efficiency can be enhanced, as in the case of the concavo-convex shape.

As described above in detail, according to the embodiments, it is possible to provide a stator core of a rotating electrical machine, and a rotating electrical machine, capable of improving cooling performance with a simple structure.

For example, according to the embodiment, it is possible to reduce the eddy current loss generated in the stator core while maintaining the manufacturing dimensional accuracy of the stator core or the rotating electrical machine, and to efficiently cool the armature coils and also the rotor installed on the inner diameter side of the stator core or the structure installed on the outer diameter side.

Furthermore, according to the embodiment, it is possible to reduce the number of components as much as possible within a range in which the characteristics required for the rotating electrical machine are secured, and to achieve miniaturization and weight reduction.

While certain embodiments have been described, these embodiments have been presented by way of example only, and are not intended to limit the scope of the inventions. Indeed, the novel embodiments described herein may be embodied in a variety of other forms; furthermore, various omissions, substitutions and modifications in the form of the embodiments described herein may be made without departing from the spirit of the inventions. The accompanying claims and their equivalents are intended to cover such forms or modifications as would fall within the scope and spirit of the inventions.

## Claims

1. A stator core of a rotating electrical machine, the stator core comprising:
an annular core back portion; and
a plurality of tooth portions extending in a radial direction of the core back portion,
wherein a flow path opened to allow a coolant to flow is provided inside the core back portion and inside the plurality of tooth portions, and
the flow path includes a flow path portion in which the coolant flows at least inside the plurality of tooth portions toward a radial direction of the stator core and toward an axial direction.

2. The stator core of the rotating electrical machine according to claim 1, wherein
the plurality of tooth portions are arranged on an outer diameter side of the core back portion, and
an inflow port and an outflow port of the flow path are provided on an outer diameter side of each of the tooth portions so as to be separated from each other in the axial direction.

3. The stator core of the rotating electrical machine according to claim 2, wherein
the flow path includes, on the back side of an inner diameter side surface of the core back portion, a flow path wall surface with which the coolant flowing through the flow path comes into contact.

4. The stator core of the rotating electrical machine according to claim 2, wherein
the flow path includes a flow path portion in which the coolant flows inside the core back portion in a circumferential direction.

5. The stator core of the rotating electrical machine according to claim 2, wherein
the flow path includes a flow path portion in which the coolant flows inside the core back portion in the axial direction and in a circumferential direction.

6. The stator core of the rotating electrical machine according to claim 2, wherein
the flow path includes a flow path portion in which the coolant flows inside the core back portion in the axial direction, and a plurality of flow path portions including the flow path portion are arranged to be aligned in a circumferential direction.

7. The stator core of the rotating electrical machine according to claim 2, wherein
an inner wall of the flow path includes a fin-shaped portion or a concavo-convex portion.

8. The stator core of the rotating electrical machine according to claim 2, wherein
a mounting hole for inserting a mounting member is provided on an outer diameter side of the stator core, and
the flow path includes a flow path portion adjusted to be apart from a region of the mounting hole by a predetermined distance or more.

9. The stator core of the rotating electrical machine according to claim 1, wherein
the plurality of tooth portions are arranged on an inner diameter side of the core back portion, and
an inflow port and an outflow port of the flow path are provided on an outer diameter side of the core back portion so as to be separated from each other in the axial direction.

10. The stator core of the rotating electrical machine according to claim 9, wherein
the flow path includes, on the back side of an outer diameter side surface of the core back portion, a flow path wall surface with which the coolant flowing through the flow path comes into contact.

11. The stator core of the rotating electrical machine according to claim 9, wherein
the flow path includes a flow path portion in which the coolant flows inside the core back portion in a circumferential direction.

12. The stator core of the rotating electrical machine according to claim 9, wherein
the flow path includes a flow path portion in which the coolant flows inside the core back portion in the axial direction and in a circumferential direction.

13. The stator core of the rotating electrical machine according to claim 9, wherein
the flow path includes a plurality of flow path portions in which the coolant flows inside the core back portion in the axial direction, and the plurality of flow path portions are arranged to be aligned in a circumferential direction.

14. The stator core of the rotating electrical machine according to claim 9, wherein
an inner wall of the flow path has a fin-shaped portion or a concavo-convex portion.

15. A rotating electrical machine comprising:
a stator in which an armature coil is provided in the stator core according to any one of claims 1 to 14; and
a rotor arranged at a predetermined distance from the stator.
